Europäisches Patentamt

European Patent Office

Office européen des brevets

(11) Veröffentlichungsnummer: **0 298 146**
**A1**

# EUROPÄISCHE PATENTANMELDUNG

(21) Anmeldenummer: 87109893.5

(22) Anmeldetag: 09.07.87

(51) Int. Cl.4: **B01D 33/10 , B01D 33/36 , B01D 29/14 , B01D 29/38**

(43) Veröffentlichungstag der Anmeldung:
**11.01.89 Patentblatt 89/02**

(84) Benannte Vertragsstaaten:
**AT BE CH DE ES FR GB GR IT LI LU NL SE**

(71) Anmelder: **Chemap AG**
**Hölzliwisenstrasse 5**
**CH-8604 Volketswil(CH)**

(72) Erfinder: **Kopp, Th., Dr.**
**Pfäffikerstrsse 1**
**CH-8604 Volketswil(CH)**

(74) Vertreter: **Meyer, Ludgerus**
**Patentanwälte Meyer, Stach, Vonnemann**
**Jungfernstieg 38**
**D-2000 Hamburg 36(DE)**

(54) Verfahren und Vorrichtung zum Abtrennen eines flüssigen Mediums aus einer Biokatalysatoren und/oder Carrierteilchen enthaltenden Suspensionen.

(57) Bei einem Verfahren und einer Vorrichtung zum Abtrennen eines flüssigen Mediums aus einer Biokatalysatoren und/oder Carrierteilchen enthaltenden Suspension wird mittels einer an der Filtratseite der Sieb- oder Filterfläche (2) jeweils gegen einen umgrenzten Teilbereich derselben offen anliegenden Spülkammer (6) während des im Betrieb kontinuierlichen Austretens von flüssigem Medium durch die anderen Teilbereiche der Sieb- oder Filterfläche (2) in dem von der Spülkammer (6) umgrenzten Teilbereich ein Rückspülstrom erzeugt, durch den etwaige auf diesen Teilbereich der Sieb- oder Filterfläche (2) entstandene Feststoffansammlungen entfernt werden.

EP 0 298 146 A1

## Verfahren und Vorrichtung zum Abtrennen eines flüssigen Mediums aus einer Biokatalysatoren und/oder Carrierteilchen enthaltenden Suspension

Die Erfindung betrifft ein Verfahren und eine Vorrichtung zum Abtrennen eines flüssigen Mediums aus einer Biokatalysatoren und/oder Carrierteilchen enthaltenden Suspension, bei welchen aus dieser durch eine die Biokatalysatoren und/oder Carrierteilchen zurückhaltende Sieb- oder Filterfläche austretendes flüssiges Medium abgeführt und der dabei entstehende Filterkuchen durch Rückspülen entfernt wird.

Bei einer bekannten Arbeitsweise dieser Art, das insbesondere bei biotechnologischen Verfahren zur Züchtung oder Gewinnung von Zellkulturen oder deren Produkten benutzt wird, wird der sich auf der Sieb- oder Filterfläche aufbauende Filterkuchen jeweils in bestimmten Zeitabständen dadurch entfernt, daß man das Abführen des flüssigen Mediums unterbricht und durch entsprechende Umschaltung von Ventilen dessen Förderrichtung umkehrt, so daß das von der Filtratseite durch die Sieb- oder Filterfläche hindurchgedrückte flüssige Medium den gebildeten Filterkuchen abhebt. Da jedoch bei zunehmender Stärke des Filterkuchen der Filtratanfall $v^*$ bei gleichbleibendem Druckgefälle gemäß der folgenden Formel abnimmt:

$$v^* = \frac{1}{\sqrt{\text{Filtrationszeit}}}$$

hat dieses Verfahren jedoch den Nachteil, daß einerseits der Filtratanfall sich ständig erheblich ändert und andererseits das Abtrennen des flüssigen Mediums in relativ kurzen Abständen immer wieder unterbrochen werden muß. Beides führt auch zu Störungen in der die Biokatalysatoren, wie Zellen, Mikroorganismen, Carrierteilchen mit oder ohne gebundene, biologisch aktive Substanzen, etc. enthaltenden Suspension, in welcher möglichst konstante Bedingungen eingehalten werden sollen. Wenn zur Zellzurückhaltung ein als Tiefenfilter wirkendes, proröses Filtermedium aus keramischem Material oder gesintertem Stahl verwendet wird, werden die an den Oberflächen der feinen Kanäle absorbierten Zellen vielfach nicht mehr genügend mit Nährstoffen versorgt und außerdem durch die infolge der enger werdenden Kanalquerschnitte erhöhte Strömungsgeschwindigkeit durch Scherkräfte geschädigt.

Aufgabe der Erfindung ist es nun, ein Verfahren und eine Vorrichtung der eingangs genannten Art zu schaffen, die mit einfachen Mitteln ein ununterbrochenes, kontinuierliches Abtrennen von flüssigem Medium ohne die bisherigen Nachteile ermöglichen.

Zur Lösung dieser Aufgabe ist das Verfahren der eingangs genannten Art erfindungsgemäß mit dem Merkmalen des Patentanspruches 1 ausgestattet.

Da auf diese Weise jeweils nur ein eng begrenzter Teilbereich der Sieb- oder Filterfläche rückgespült wird, ergibt sich ohne Unterbrechung der Abtrennung von flüssigem medium und ohne unerwünschte Schwankungen im Filtratanfall und den Bedingungen in der Suspension eine befriedigende Entfernung des Filterkuchens. Diese Arbeitsweise eignet sich insbesondere für biotechnologische Verfahren mit externer Mediumumwälzung, bei welchem die Aufbereitung des Mediums durch Zugabe von Säure, Lauge oder anderen Hilfsstoffen und eine etwaige Begasung in einer externen Kreislaufleitung durchgeführt wird. Dies gilt vor allem für Zellzüchtungsverfahren, weil im Inneren eines die Zellen enthaltenden Teiles einer Fermentationsanlage angeordnete Meßsonden von den Zellen bewachsen werden können und auch eine direkte Begasung zu einer Scherbeeinträchtigung der Zellen durch aufsteigende Gasblasen führen kann.

Das neue Verfahren eignet sich ferner zur Zellabtrennung bei der Aufbereitung der nach der Fermentation anfallenden Suspension. Auch in anderen Fällen ist die einfache Gewinnung von zellfreiem flüssigen Medium von Vorteil. So kann beispielsweise die Entnahme einer zellfreien Probe die Bestimmung der Produktkonzentration wesentlich erleichtern.

Vorteilhafte weitere Ausgestaltungen des Verfahrens sind in den Unteransprüchen 2 bis 4 beschrieben.

Gegenstand der Erfindung ist ferner eine Vorrichtung zum Abtrennen eines flüssigen Mediums aus einer Biokatalysatoren und/oder Carrierteilchen enthaltenden Suspension, welche die Merkmale des Patentanspruches 5 aufweist.

Vorteilhafte weitere Ausgestaltungen dieser Vorrichtung sind in den Unteransprüchen 6 bis 18 definiert.

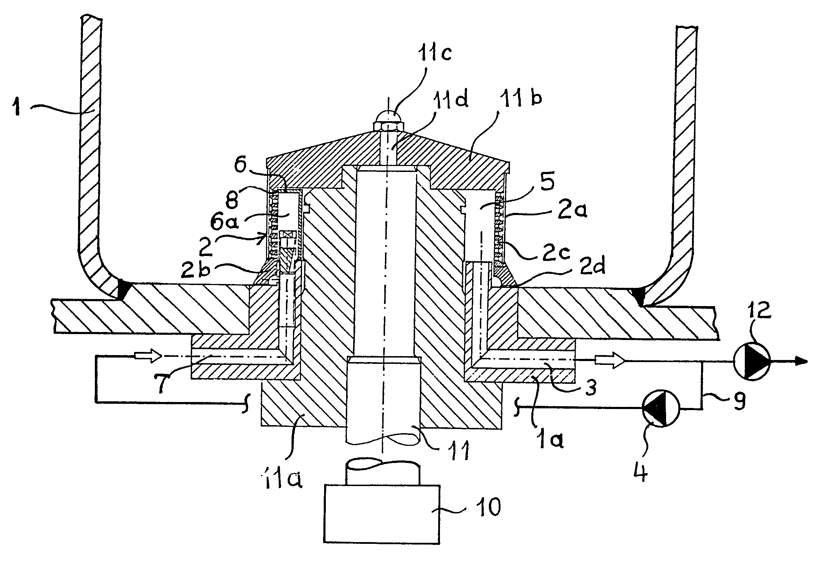

Im folgenden wird eine bevorzugte Ausführungsform der erfindungsgemäßen Vorrichtung unter Bezugnahme auf die beigefügte Zeichnung weiter erläutert. Diese zeigt ein schematisches Schnittbild der in einen Zellkultur-Fermenter eingebauten Vorrichtung.

Im Boden des im wesentlichen zylindrischen Behälters 1 eines Fermenters ist ein Ringteil 1a konzentrisch eingefügt, durch dessen Ringöffnung ein mit einer Welle 11 drehfest verbundenes Nabenteil 11a verdrehbar in den Behälter 1 hineinragt. Auf das im Behälter 1 gelegene Ende des Nabenteils 11a ist eine Tragkappe 11b aufgesetzt, die mit einer zentrischen Durchgangsbohrung auf einen Endzapfen 11d der Welle 11 aufgeschoben und durch eine mit einem Gewinde des Endzapfens 11d verschraubte Hutmutter 11c auf dem Nabenteil 11a zu gemeinsmer Verdrehung festgelegt ist.

An dem über das Nabenteil 11a radial auswärts überkragenden Außenrand der Tragkappe 11b ist eine im wesentlichen zylindrische Sieb- oder Filterfläche 2 mit einer Stützwand 2b mit einer Vielzahl von im wesentlichen radial verlaufenden Austrittsbohrungen 2c so befestigt, daß ihr Endrand unter Bildung eines engen Ringspalts 2d dicht an den Boden des Behälters 1 heranreicht. Auf der äußeren Umfangsfläche der Stützwand 2b ist ein feinstmaschiges Sieb 2a mit einer Durchgangsweite der Sieböffnungen von 5 $\mu$m lösbar festgelegt. Der zwischen der Stützwand 2b und der Umfangsfläche des Nabenteils 11a liegende, ringförmige Ablaufraum 5 für die durch das Sieb 2a austretende Flüssigkeit ist über mindestens eine durch das Ringteil 1a geführte Abführleitung 3 mit einer Abführpumpe 12 verbunden. An einer Stelle des Ablaufraumes 5 ist darin eine gegenüber diesem geschlossene Spülkammer 6 stationär angeordnet, die gegen einen vorbestimmten Umfangssektor der Innenfläche der Stützwand 2b offen ist und an ihrem der Stützwand 2b gegenüberliegenden Wandungsrand mit dieser einen engen, labyrinthartigen Dichtungsspalt 8 bildet.

Der Innenraum 6a der Spülkammer 6 ist über eine durch das Ringteil 1a geführte Zuführleitung 7 mit der Druckseite einer Förderpumpe 4 verbunden, die über eine vor der Abführpumpe 12 von der Abführleitung 3 abgehende Zweigleitung 9 aus dem Ablaufraum 5 abgeführte Flüssigkeit in die Spülkammer 6 fördert.

Im Betrieb strömt die Rückspülflüssigkeit unter dem durch die Förderpumpe 4 erzeugten Überdruck radial auswärts durch die in dem von der Spülkammer 6 überdeckten Umfangssektor liegenden Austrittsbohrungen 2c der durch den Motor 10 über die Welle 11, das Nabenteil 11a und die Tragkappe 11b mit einstellbarer Winkelgeschwindigkeit kontinuierlich oder absatzweise verdrehten Stützwand 2b und die Durchgangsöffnungen des auf dieser festgelegten Siebes 2a in den Behälter 1 und hebt dabei etwaige auf dem Sieb zuvor gebildete Feststoffansammlungen ab, während gleichzeitig in dem nicht von der Spülkammer 6 abgedeckten Bereich der Stützwand 2b ständig Flüssigkeit aus dem Behälter 1 radial einwärts durch das Sieb 2a in die Ablaufkammer 5 austreten kann. Auf diese Weise wird eine kontinuierliche Abtrennung von flüssigem Medium bei gleichzeitig in gewünschten Zeitabständen selbsttätig ablaufender Rückspülung des Siebes 2a erreicht.

Die vorstehend an Hand einer bevorzugten Ausführungsform erläuterte Vorrichtung und das zugehörige Verfahren können vom Fachmann je nach den Anforderungen des Einzelfalls in verschiedener Weise zweckentsprechend abgewandelt werden, sofern dabei jeweils mindestens ein Teilbereich der Sieb- oder Filterfläche unter fortdauerndem Austreten von flüssigem Medium durch die übrigen Teilbereiche einem Rückspülstrom ausgesetzt und der so rückgespülte Teilbereich kontinuierlich oder absatzweise verlagert wird.

## Ansprüche

1. Verfahren zum Abtrennen eines flüssigen Mediums aus einer Biokatalysatoren und/oder Carrierteilchen enthaltenden Suspension, bei welchem man aus dieser durch eine die Biokatalysatoren und/oder Carrierteilchen zurückhaltende Sieb- oder Filterfläche austretendes flüssiges Medium abführt und den dabei entstehenden Filterkuchen durch Rückspülen entfernt, dadurch gekennzeichnet, daß man

a) während des laufenden Austretens des flüssigen Mediums mindestens einen jeweils nur auf einen begrenzten Teilbereich der Sieb- oder Filterfläche einwirkenden Rückspülstrom erzeugt und

b) jeden Rückspülstrom relativ zur Sieb- oder Filterfläche kontinuierlich oder schrittweise so verlagert, daß alle Teilbereiche nacheinander ausreichend rückgespült werden.

2. Verfahren nach Anspruch 1, dadurch gekennzeichnet, daß man einen Teil der durch die Sieb- oder Filterfläche ausgetretenen flüssigen Mediums zur Erzeugung des Rückspülstroms verwendet.

3. Verfahren nach Anspruch 1 oder 2, dadurch gekennzeichnet, daß man in eine am zugeordneten Teilbereich der Sieb- oder Filterfläche filtratseitig offen anliegende Spülkammer einen Rückspülstrom einleitet und diese relativ zur Sieb- oder Filterfläche kontinuierlich verschiebt.

4. Verfahren nach einem der Ansprüche 1 bis 3, dadurch gekennzeichnet, daß man den Rückspülstrom in eine an einer zylindrischen Sieb- oder Filterfläche filtratseitig anliegende Spülkammer einführt und die Sieb- oder Filterfläche kontinuierlich oder absatzweise verdreht.

5. Vorrichtung zum Abtrennen eines flüssigen Mediums aus einer Biokatalysatoren und/oder Carrierteilchen enthaltenden Suspension, mit einem die Suspension aufnehmenden Behälter, einer von der Suspension beaufschlagten, die Biokatalysatoren und/oder Carrierteilchen zurückhaltenden Sieb- oder Filterfläche, Vorrichtungen zum Abführen des austretenden flüssigen Mediums und Vorrichtungen zum Entfernen einer auf der Sieb- oder Filterfläche entstehenden Feststoffschicht, dadurch gekennzeichnet, daß

a) an der Filtratseite der Sieb- oder Filterfläche (2) mindestens eine jeweils gegen einen umgrenzten Teilbereich derselben offen anliegende Spülkammer (6) angeordnet ist,

b) jede Spülkammer (6) bzw. die Sieb- oder Filterfläche (2) relativ zueinander anliegend verschiebbar geführt sind,

c) Antriebsvorrichtungen (10) zur alle Teilbereiche überstreichenden kontinuierlichen oder schrittweisen Relativverschiebung jeder Spülkammer (6) bzw. der Sieb- oder Filterfläche (2) vorgesehen sind und

d) jede Spülkammer (6) über eine Zuführleitung (7) mit einer Fördervorrichtung (4) zum Einführen einer Rückspülflüssigkeit bei gleichzeitigem Austritt von flüssigem Medium durch die nicht von einer Spülkammer (6) abgedeckten Bereiche der Sieb- oder Filterfläche (2) verbunden ist.

6. Vorrichtung nach Anspruch 5, dadurch gekennzeichnet, daß die Wandungen jeder Spülkammer (6) mit der gegenüberliegenden Sieb- oder Filterfläche (2) einen engen, vorzugsweise labyrinthartigen Dichtungsspalt (8) bilden.

7. Vorrichtung nach Anspruch 5 oder 6, dadurch gekennzeichnet, daß jede Spülkammer (6) an einer im wesentlichen zylindrischen Sieb- oder Filterfläche (2) koaxial verdrehbar geführt ist.

8. Vorrichtung nach Anspruch 5 oder 6, dadurch gekennzeichnet, daß eine im wesentlichen zylindrische Sieb- oder Filterfläche (2) an mindestens einer stationären Spülkammer (6) anliegend verdrehbar geführt ist.

9. Vorrichtung nach einem der Ansprüche 5 bis 8, dadurch gekennzeichnet, daß die Sieb- oder Filterfläche (2) eine filtratseitige Stützwand (2b) mit einer Vielzahl von Austrittsbohrungen (2c) sowie ein auf der Stützwand (2b) angeordnetes Sieb oder Filter (2a) aufweist.

10. Vorrichtung nach einem der Ansprüche 5 bis 9, dadurch gekennzeichnet, daß jede Spülkammer (6) über eine Zufuhrleitung (7) mit der Druckseite einer Förderpumpe (4) kommuniziert, die saugseitig mit einer Abführleitung (3) für das durch die Sieb- oder Filterfläche (2) ausgetretene flüssige Medium verbunden ist.

11. Vorrichtung nach Anspruch 10, dadurch gekennzeichnet, daß die Förderpumpe (4) in einer von der Abführleitung (3) abgehenden Zweigleitung (9) angeordnet ist.

12. Vorrichtung nach einem der Ansprüche 5 bis 11, dadurch gekennzeichnet, daß an der Filtratseite der im wesentlichen zylindrischen Sieb- oder Filterfläche (2) mindestens eine über deren Höhe durchgehende Spülkammer (6) anliegt, deren Breite in Umfangsrichtung zwischen 2° und 30° und vorzugsweise zwischen 5° und 15° des Innenumfangs der Sieb- oder Filterfläche (2) liegt.

13. Vorrichtung nach einem der Ansprüche 5 bis 12, gekennzeichnet durch einen hydraulischen, pneumatischen oder elektrischen Motor (10) zum kontinuierlichen Verdrehen der im wesentlichen zylindrischen Sieb- oder Filterfläche (2) bzw. jeder Spülkammer (6).

14. Vorrichtung nach einem der Ansprüche 5 bis 12, dadurch gekennzeichnet, daß die Sieb- oder Filterfläche (2) durch Rückstoßwirkung des austretenden flüssigen Mediums kontinuierlich verdrehbar ist.

15. Vorrichtung nach einem der Ansprüche 5 bis 14, dadurch gekennzeichnet, daß die Sieb- oder Filterfläche (2) zum Zurückhalten von Carrierteilchen eine Porengröße zwischen etwa 10 $\mu$m und 100 $\mu$m aufweist.

16. Vorrichtung nach einem der Ansprüche 5 bis 15, dadurch gekennzeichnet, daß die Sieb- oder Filterfläche (2) zum Zurückhalten von Zellen eine Porengröße zwischen etwa 0,5 und 10 $\mu$m und vorzugsweise zwischen 1 und 5 $\mu$m aufweist.

17. Vorrichtung nach einem der Ansprüche 5 bis 16, dadurch gekennzeichnet, daß die Spülkammer (6) an der Innenseite der im wesentlichen zylindrischen Sieb- oder Filterfläche (2) angeordnet ist.

18. Vorrichtung nach einem der Ansprüche 5 bis 17, dadurch gekennzeichnet, daß die Sieb- oder Filterfläche (2) etwa 10 bis 100 cm² und vorzugsweise 20 bis 50 cm² pro Liter des die Suspension aufnehmenden Behälters (1) beträgt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-1 543 530 ("BIEX" INDUSTRIAL INSTALLATIONS & CONSTRUCTIONS) * Seite 1, rechte Spalte, Abschnitt 8; Seite 2, linke Spalte, Abschnitt 3 * --- | 1-5,8, 10,13, 17 | B 01 D 33/10 B 01 D 33/36 B 01 D 29/14 B 01 D 29/38 |
| X | DE-C- 609 003 (AUTO KLEAN STRAINERS et al.) * Seite 2, Zeilen 101-126; Seite 3, Zeilen 1-66 * --- | 1-3,7 | |
| A | US-A-3 443 696 (A.H. SCHUTTE) * Spalte 4, Zeilen 3-75; Spalte 5, Zeilen 1-14; Spalte 6, Zeilen 5-31 * ----- | 1,9,15 | |

| | | | RECHERCHIERTE SACHGEBIETE (Int. Cl.4) |
|---|---|---|---|
| | | | B 01 D |

Der vorliegende Recherchenbericht wurde für alle Patentansprüche erstellt

| Recherchenort | Abschlußdatum der Recherche | Prüfer |
|---|---|---|
| DEN HAAG | 10-12-1987 | KERRES P.M.G. |